# FASCICULE DE BREVET EUROPEEN

(11) **EP 4 733 938 B1**
(45) Date de publication et mention de la délivrance du brevet: **26.08.2026**
(21) Numéro de dépôt: 24315493.7
(22) Date de dépôt: 23.10.2024
(51) Int. Cl.: G06F 9/50, G06N 20/00, H04L 67/60, H04W 24/02, H04W 12/02, H04W 12/12, H04L 9/40

(54) **ARCHITECTURE DE TRAITEMENT INTÉGRÉ D'UN PIPELINE DE SERVICES D'INFÉRENCE LLM AVEC UN RÉSEAU 5G**
INTEGRIERTE VERARBEITUNGSARCHITEKTUR FÜR LLM-INFERENZDIENSTPIPELINE MIT 5G-NETZWERK
INTEGRATED PROCESSING ARCHITECTURE FOR A PIPELINE OF LLM INFERENCE SERVICES WITH A 5G NETWORK

(43) Date de publication de la demande: 29.04.2026
(73) Titulaire: ILIAD, 75008 Paris (FR)
(72) Inventeur: Sayad, Khaled, 75008 Paris (FR); Escande, Patrick, 75008 Paris (FR)
(74) Mandataire: Dupuis-Latour, Dominique

(56) Documents cités:
- WO-A1-2023/229501
- WO-A1-2024/164822
- CN-A- 116 801 219

## Description

L'invention concerne les réseaux cellulaires mobiles de cinquième génération (5G), en particulier une architecture spécifiquement adaptée au traitement des interactions entre des équipements utilisateurs (UE) et des ressources associées à des services d'inférence basés sur des grands modèles de langage (LLM).

Dans la présente description, par "utilisateurs", on entendra non seulement des personnes physiques connectées au réseau 5G au moyen d'un smartphone comme UE, mais également, et surtout, des dispositifs matériels autonomes tels que par exemple des robots autonomes ou des caméras de surveillance, connectés au réseau cellulaire 5G et dont le profil est déjà renseigné dans une base d'utilisateurs du réseau cœur 5G.

### État de la technique antérieure

Le point de départ de l'invention est la constatation que ces divers utilisateurs sont susceptibles d'envoyer des requêtes à des services d'inférence LLM, requêtes qui peuvent être produites en très grand nombre et à des cadences relativement élevées, notamment dans le cas des dispositifs matériels autonomes..

Dans le cas des réseaux 5G interfacés à des services d'inférence LLM (réseaux 5G orientés IA), ceux-ci doivent être optimisés pour réduire la latence et assurer un débit élevé, par exemple pour traiter un très grand nombre de tokens par requête.

Un service d'inférence basé sur LLM fonctionne en exécutant un modèle déjà entraîné pour traiter les tokens des utilisateurs et générer les sorties correspondantes. Ce processus peut être optimisé davantage en utilisant des techniques connues telles que la génération augmentée par récupération (RAG), l'optimisation du cache, le routage des LLM, etc.

L'invention vise à proposer une architecture intégrée de traitement d'un pipeline de service d'inférence LLM qui optimise à la fois les ressources réseau et les services d'inférence LLM, afin de gérer efficacement les ressources disponibles, maximiser la qualité de service (QoS), réduire les coûts et améliorer l'efficacité énergétique globale de l'ensemble. WO 2024/164822 A1 divulgue une technique d'optimisation des ressources utilisant un apprentissage mixte.

Le but de l'invention est de proposer à cet effet des processus, des architectures et des outils permettant de mieux adapter les réseaux 5G à la gestion de ces nouvelles classes de trafic générées par les services d'inférence LLM.

### Exposé de l'invention

L'idée de base de l'invention est de tirer parti de l'architecture distribuée et de la flexibilité de gestion des réseaux 5G, qui sont des réseaux nativement architecturés cloud, pour offrir des services d'inférence LLM efficaces en termes de coût et d'énergie.

Plus précisément, l'idée de base de l'invention consiste, dans ce contexte, à adapter le réseau 5G dynamiquement, c'est-à-dire en fonction du comportement des utilisateurs, pour répondre aux besoins spécifiques de ceux-ci en utilisant les principes, en eux-mêmes connus, de la virtualisation des fonctions réseau (NFV) et des réseaux définis par logiciel (SDN), en transformant les exigences d'optimisation des LLM en configurations réseau qui pourront être intégrées automatiquement et dynamiquement au réseau 5G.

En d'autres termes, il s'agit de proposer une architecture intégrée qui optimise à la fois les ressources réseau et les services d'inférence LLM dans un environnement 5G en exploitant les capacités de programmation et d'orchestration "cloud-natives" pour améliorer la latence, maximiser la QoS, réduire les coûts de mise en place et de fonctionnement et finalement améliorer l'efficacité énergétique d'ensemble du système.

Dans le cas évoqué plus haut de l'amélioration du service d'inférence LLM par des opérations telles que RAG, optimisation du cache, routage LLM, etc., l'invention permettra avantageusement de mettre en œuvre un apprentissage réparti où ces opérations, qui sont intensives en calcul, sont exécutées dans le cloud central, pour éviter de les déployer dans des environnements edge qui, bien que proches des utilisateurs finaux, pourraient compromettre les performances en raison des limitations des ressources de calcul au niveau edge.

De façon propre à l'invention, il est possible d'exploiter l'informatique en réseau dans le contexte d'un réseau 5G orienté IA pour décharger de telles opérations fortement consommatrices de ressources de calcul vers des éléments du réseau (et non plus des ressources edge ou cloud), tout particulièrement vers des fonctions de plan utilisateur (UPF) du réseau 5G, ce plan utilisateur faisant également fonction de plan de transport des données pour l'acheminement des paquets de données de/vers les UE entre les UE et le plan de contrôle de réseau cœur 5G.

Selon l'invention, ce réseau distribué de UPF est un réseau programmable dynamiquement par un gestionnaire de cycle de vie assurant l'instanciation, la surveillance, la mise à jour, le redimensionnement (scaling) et/ou la terminaison des services d'inférence LLM, de manière à modifier dynamiquement et en temps réel le réseau de UPF, via le plan de contrôle de réseau cœur.

Une telle architecture, où les opérations d'optimisation (RAG, optimisation du cache, routage des LLM, ...) sont exécutées au niveau du plan utilisateur et du plan de données à proximité des utilisateurs profite de la disponibilité des données comportementales de ces derniers, puisqu'ils sont connectés au réseau 5G et donc directement au plan utilisateur et de données. Il est ainsi possible de dériver aisément des profils utilisateur et des modèles d'utilisation des services d'inférence LLM par un utilisateur donné ou un groupe d'utilisateurs, et donc de déterminer davantage de contextes à utiliser par exemple pour la RAG, ou pour optimiser le cache sur une grappe (cluster) d'UE 5G partageant des similitudes d'utilisation. Il est également possible d'utiliser cet agencement pour décharger certaines opérations d'inférence LLM vers des éléments du réseau, au niveau du plan utilisateur/plan de données, en allégeant d'autant les ressources edge ou cloud nécessaires pour le traitement des requêtes LLM.

A cet effet, l'invention propose, plus précisément, une architecture de traitement intégré d'un pipeline de services d'inférence basés sur des LLM avec un réseau 5G, comprenant, de manière en elle-même connue : un réseau d'accès radio, pour la communication radiofréquence avec des équipements utilisateurs, UE ; un réseau distribué de Fonctions de plan utilisateur, UPF, faisant également fonction de plan de transport de données pour l'acheminement de paquets de données de/vers les UE ; et un plan de contrôle de réseau cœur comprenant des fonctions 5G selon 3GPP.

De façon caractéristique de l'invention, cette architecture comporte en outre un métacontrôleur comprenant : un registre de services à la demande, comportant au moins un service d'inférence LLM apte à être déployé à la demande ou de façon automatisée ; un orchestrateur centralisé, apte à coopérer d'une part avec le plan de contrôle de réseau cœur et d'autre part avec le registre de services à la demande ; un gestionnaire de cycle de vie, pour l'instanciation, la surveillance, la mise à jour, le redimensionnement et/ou la terminaison des services d'inférence ; et un opérateur de requêtes, apte à délivrer, à l'au moins un service d'inférence LLM du registre de services à la demande, des requêtes de service générées par l'orchestrateur centralisé.

Le réseau distribué de UPF est un réseau programmable dynamiquement par l'orchestrateur centralisé, à la demande du gestionnaire de cycle de vie, via le plan de contrôle de réseau cœur.

L'orchestrateur centralisé comprend :
- des moyens pour surveiller en continu le réseau 5G, aptes à analyser des requêtes utilisateur produites par les UE, pour en dériver des profils utilisateur et des modèles d'utilisation des services d'inférence LLM ;
- des moyens pour, en fonction des profils utilisateur et des modèles d'utilisation des services d'inférence LLM obtenus : sélectionner dynamiquement des ressources en fonction des profils utilisateur et des modèles d'utilisation des services d'inférence LLM, modifier dynamiquement la configuration du réseau 5G par interaction avec les UPF, et/ou programmer les UPF pour l'exécution locale de tâches spécifiques liées à l'inférence LLM par modification des paquets en provenance et/ou à destination des UE ; et
- des moyens pour générer les requêtes de service à destination de l'opérateur de requêtes.

Selon diverses caractéristiques subsidiaires avantageuses :
- pour dériver automatiquement les profils utilisateur et les modèles d'utilisation des services d'inférence LLM, les moyens de surveillance en continu du réseau 5G de l'orchestrateur centralisé comprennent des moyens processeurs coopérant avec une base de données mise en œuvre avec des algorithmes d'apprentissage machine ;
- l'au moins un service d'inférence LLM comprend au moins l'un d'entre : un service LCaaS de caches LLM par modèle de langage, pour une orchestration dynamique et optimale des caches des applications LLM à travers le réseau edge afin de réduire la latence des requêtes ; un service eCaaS d'allocation dynamique de bande passante des ressources radio 5G, pour adaptation de la bande passante au régime d'utilisation des LLM et des classes de trafic prédéfinies downlink/uplink/downlink&uplink en fonction des besoins spécifiques des UE ; un service INFaaS d'inférence LLM personnalisée pour les UE ; un service GRaaS de gestion de garde-fous LLM pour renforcement de la confidentialité des requêtes utilisateur ; et/ou un service LRaaS de routage des requêtes utilisateur produites par les UE vers le modèle de langage le plus approprié pour réduction de la latence et/ou amélioration de la Qualité de service, QoS, et/ou de la pertinence des réponses aux requêtes utilisateur ; et toute combinaison des précédents ;
- les services d'inférence LLM sont des fichiers descriptifs de type Infrastructure as Code, laC ;
- les requêtes de service générées par l'orchestrateur centralisé (220) et l'opérateur de requêtes mettent en œuvre des Fonctions réseau containérisées, CNF, correspondant aux services d'inférence LLM inclus dans le registre de services à la demande ;
- les CNF correspondant aux services d'inférence LLM sont opérées dans une architecture de Virtualisation des fonctions réseau, NFV, selon les spécifications ETSI ;
- le réseau distribué de UPF est un réseau hétérogène comprenant : des UPF de fonction principale de commutation/routage, et/ou des UPF comprenant, en plus des fonctions de commutation/routage, des fonctions modulables de prétraitement des requêtes utilisateur spécifiques aux applications des LLM ;
- le réseau distribué de UPF est un réseau comprenant un nombre dynamiquement modulable de UPF ;
- les UPF sont développées sous forme de microservices déployés dans des infrastructures cloud dans des conteneurs orchestrés par un orchestrateur de conteneurs ;
- les UPF sont programmées en langage P4 ;
- le réseau 5G, l'orchestrateur centralisé et le registre de services à la demande sont implémentés en tant que fonctions containérisées, dont l'instanciation et la gestion de cycle de vie sur l'infrastructure matérielle des centres de données sont gérées par un orchestrateur de conteneurs ;
- l'orchestrateur de conteneurs mentionné plus haut est avantageusement une solution Kubernetes, et le réseau 5G est une solution open source de type Free5gc ou sd-core ;
- les profils utilisateur et les modèles d'utilisation des services d'inférence LLM comprennent au moins l'un d'entre : fréquence d'utilisation ; popularité de contenu ; localisation et/ou mobilité géographique des UE ; contrainte de Qualité de service, QoS ; contrainte de latence ; et/ou interactions avec d'autres UE ; et toute combinaison des précédents ;
- lesdites tâches spécifiques liées à l'inférence LLM exécutées localement par les UPF comprennent au moins l'une d'entre : génération augmentée par récupération, RAG ; optimisation dynamique de caches utilisateur ; routage spécifique des requêtes utilisateur ; calcul de métrique de similarité d'utilisations entre UE ; clustering de données UE similaires en entrée et/ou en sortie ; et/ou opération d'inférence LLM ; et toute combinaison des précédents ;
- les UE sont des équipements du groupe comprenant des smartphones, des robots autonomes, et/ou des caméras de surveillance vidéo, comprenant un circuit permettant la connexion au réseau 5G et dont le profil est déjà renseigné dans une base d'utilisateurs du réseau cœur.

### Brève description des dessins

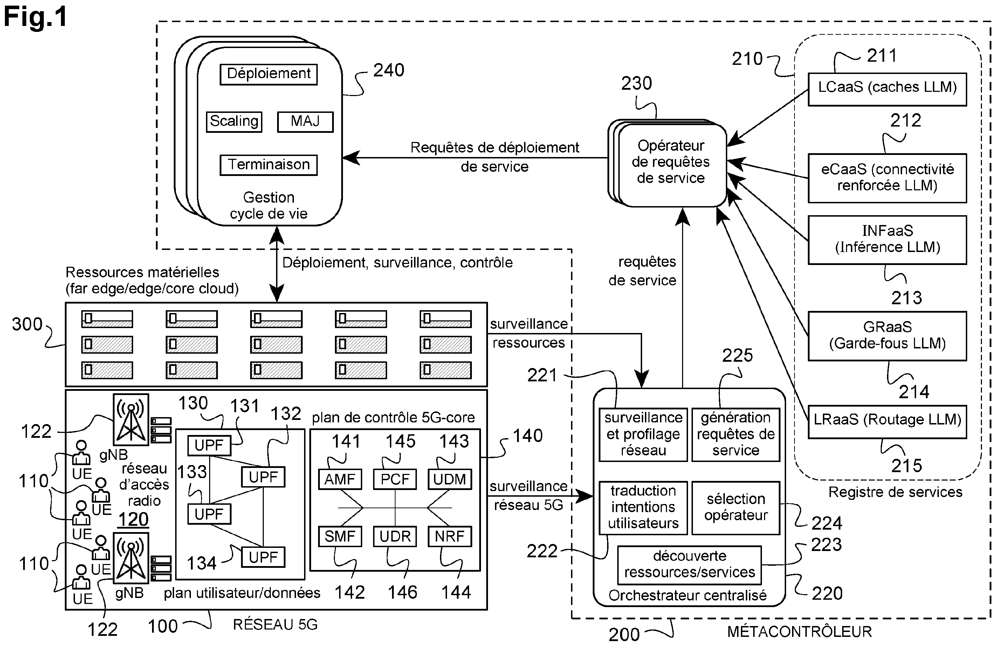

La Figure 1 est un synoptique, sous forme de schéma par blocs, des différents éléments fonctionnels de l'architecture de traitement d'un pipeline de services d'inférence LLM par réseau 5G selon l'invention.

### Description détaillée de modes de réalisation de l'invention

On va maintenant décrire un exemple de mise en œuvre de l'invention, en référence au dessin annexé.

Sur la Figure 1, la référence 100 désigne les principaux éléments constitutifs, en eux-mêmes connus, d'un réseau 5G la référence 200 désigne de façon générale un métacontrôleur, caractéristique de l'invention pour atteindre les buts évoqués plus haut en introduction, et la référence 300 désigne globalement des ressources matérielles (serveurs, datacenters, etc.), utilisées par le réseau 5G 100 et le métacontrôleur 200 de façon délocalisée, proche ou distante (ressources dénommées "far edge", "edge", "core cloud", etc. selon le cas). ces ressource matérielles sont en elles-mêmes connues, tant dans leur structure que dans la manière d'y accéder, et ne sont en elles-mêmes pas modifiées pour la mise en œuvre de l'invention.

Le réseau 100 est un réseau mobile 5G, cette dénomination étant entendue au sens spécifique tel que défini par les entités de normalisation, notamment le 3GPP. Il en sera de même pour les différents composants de ce réseau 5G cités dans la présente description, tels que "UPF", "plan de transport/plan de données", "plan de contrôle", "réseau cœur", etc., qui doivent être entendus dans leur sens particulier, compris de l'homme du métier spécialiste des réseaux de communication mobile. La référence 110 désigne des équipements utilisateurs, UE, servant à échanger sans fil des informations avec le réseau 5G. Comme indiqué plus haut, ces utilisateurs peuvent être aussi bien des personnes physiques que des équipements purement matériels autonomes tels que robots ou caméras, dont le profil est déjà renseigné dans le réseau 5G. Le réseau 5G comprend une partie de réseau d'accès radio 120 avec un certain nombre de stations de base 122, désignées gNB dans la nomenclature des réseaux 5G.

Le réseau d'accès radio 120 est interfacé à un réseau distribué 130 de fonctions de plan utilisateur, UPF dans la nomenclature des réseaux 5G, 131, 132, 133, 134, ..., le plan utilisateur faisant également fonction de plan de transport de données pour l'acheminement de paquets de données en provenance et à destination des UE 110.

Le plan utilisateur/plan de données 130 est interfacé à un plan de contrôle de réseau cœur 140 (5G-core), incluant les fonctions et les ressources telles que :
- AMF 141 : Access and Mobility-management Function ;
- SMF 142 : Session-Management Function ;
- UDM 143 : User-Data Management ;
- NRF 144 : Network-function Repository Function ;
- PCF 145 : Policy-Control Function ;
- UDR 146 : User-Data Repository, ce référentiel stockant notamment l'identité et le profil des différents UE connus du réseau.

De façon caractéristique de l'invention, ce réseau 5G est associé à un métacontrôleur 200, destiné à orchestrer et optimiser dynamiquement les ressources cloud et les fonctions réseau 5G en fonction de l'état du réseau 5G et des besoins des services d'inférence LLM à tout instant donné.

Le métacontrôleur 200 comprend un registre de services 210 qui inclut les différents services d'inférence LLM mis en œuvre par l'invention, notamment et de façon non limitative :
- un service LCaaS 211, de caches LLM par modèle de langage, pour une orchestration dynamique et optimale des caches des applications LLM à travers le réseau edge afin de réduire la latence des requêtes ;
- un service eCaaS 212, d'allocation dynamique de bande passante des ressources radio 5G, pour une adaptation de la bande passante au régime d'utilisation des LLM et des classes de trafic prédéfinies downlink/uplink/downlink&uplink en fonction des besoins spécifiques des UE ;
- un service INFaaS 213, d'inférence LLM personnalisée pour les UE ;
- un service GRaaS 214, de gestion de garde-fous LLM pour renforcement de la confidentialité des requêtes utilisateur ;
- un service LRaaS 215, de routage des requêtes utilisateur produites par les UE vers le modèle de langage le plus approprié pour réduction de la latence et/ou amélioration de la Qualité de service, QoS, et/ou de la pertinence des réponses aux requêtes utilisateur.

Très avantageusement, ces services d'inférence LLM sont des fichiers descriptifs de type Infrastructure as code (IAC), permettant de gérer une infrastructure virtuelle par le biais de fichiers descripteurs, en évitant la mise en œuvre d'interfaces de programmation API spécifiques à chaque application.

Le métacontrôleur 200 comprend également un orchestrateur centralisé 220 qui surveille en continu les éléments du réseau 5G, le comportement des utilisateurs, et les ressources des centres de données.

Cet orchestrateur centralisé effectue essentiellement des tâches de :
- surveillance et profilage du réseau, par détection du comportement des utilisateurs pour déclencher l'orchestration des ressources réseau (bloc 221) ;
- traduction des intentions des utilisateurs, pour adaptation des configurations réseau en fonction des modèles d'utilisation des services LLM (bloc 222) ;
- découverte des ressources et des services, avec gestion dynamique des services et des ressources disponibles dans le réseau pour optimiser leur utilisation (bloc 223) ;
- sélection de l'opérateur, avec choix du service à intégrer pour répondre aux exigences de QoS des utilisateurs (bloc 224) ; et
- génération de requêtes de service, avec création de requêtes de service à destination d'un opérateur de requêtes de service 230 (bloc 225).

En ce qui concerne les profils utilisateur et les modèles d'utilisation des services d'inférence LLM (bloc 222), ceux-ci peuvent comprendre, notamment et de façon non limitative, les paramètres suivants :
- fréquence d'utilisation ;
- popularité de contenu ;
- localisation et/ou mobilité géographique des UE ;
- contrainte de QoS ;
- contrainte de latence ;
- interactions des UE avec d'autres UE.

Pour dériver automatiquement ces profils utilisateur et modèles d'utilisation des services d'inférence LLM (bloc 222), la surveillance en continu du réseau 5G (bloc 221) met avantageusement en œuvre des algorithmes de type machine learning opérant à partir d'une base de connaissances préalablement constituée et mise à jour en permanence. Les requêtes de service générées par l'orchestrateur centralisé 220 sont appliquées à un opérateur de requêtes de service 230, interfacé au registre de services d'inférence LLM 210 et à un gestionnaire de cycle de vie 240.

Les requêtes de service générées par l'orchestrateur centralisé 220 vont permettre de déployer les services d'inférence LLM nécessaires en évitant les conflits potentiels entre contrôleurs.

Le gestionnaire de cycle de vie 240 est chargé de l'instanciation, de la surveillance, de la mise à jour, de la mise à l'échelle (scaling) et de la terminaison des services déployés.

Avantageusement, les requêtes générées par l'orchestrateur centralisé 200 et par l'opérateur de requêtes de service 230 mettent en œuvre des fonctions réseau containérisées (CNF) correspondant aux services d'inférence LLM inclus dans le registre de services 210.

Ces CNF sont avantageusement opérées dans une architecture de virtualisation des fonctions réseau (NFV) selon les spécifications ETSI. De même, le réseau 5G 100, l'orchestrateur centralisé 220 et le registre de services 210 sont avantageusement implémentés en tant que fonctions containérisées dont l'instanciation et la gestion du cycle de vie sur l'infrastructure matérielle 300 sont gérées par un orchestrateur de conteneurs.

Cet orchestrateur de conteneurs peut être notamment une solution Kubernetes, le réseau 5G étant une solution open source de type Free5gc ou sd-core (projet Aether).

Les copies des inférences LLM, ou des fragments de modèles, par exemple des caches de réponses ou des modèles légers, sont placés dans les UPF 131, 132, 133, 134, ... réparties dans le réseau 5G 100, de manière à traiter localement les requêtes des utilisateurs et réduire ainsi la latence.

On rappellera que, dans les réseaux 5G, le plan utilisateur/données est un plan programmable, ce qui permet de configurer directement et dynamiquement les UPF pour exécuter des tâches spécifiques liées à l'inférence LLM.

Ces tâches spécifiques exécutées localement par les UPF 131, 132, 133, 134 ... peuvent comprendre notamment et de façon non limitative :
- génération augmentée par récupération (RAG) ;
- optimisation dynamique des caches utilisateur ;
- routage spécifique des requêtes utilisateur ;
- calcul de métriques de similarité d'utilisations entre UE ;
- clustering de données UE similaires en entrée et/ou en sortie ;
- opérations d'inférence LLM.

En distribuant la charge de traitement des inférences à travers plusieurs UPF, on équilibre la charge et on évite les goulots d'étranglement. De même, en utilisant les UPF pour traiter certaines parties des inférences directement dans le réseau, on réduit le besoin de transmettre toutes les requêtes vers des centres de données lointains, économisant ainsi de la bande passante et réduisant la consommation énergétique.

Enfin, grâce à l'orchestration centralisée, le réseau 5G peut ajuster en temps réel la distribution des modèles de langage en fonction à la fois (i) du comportement de l'utilisateur et (ii) des conditions du réseau à un moment donné, assurant ainsi une performance optimale en toutes circonstances.

Les UPF chargées de ces tâches sont de préférence développées sous forme de microservices déployés dans des infrastructures cloud par des conteneurs orchestrés par un orchestrateur de conteneurs.

De préférence, les UPF sont programmées de manière à répondre aux exigences suivantes, qui peuvent être en particulier atteintes avec un langage de programmation tel que le langage P4 :
- programmabilité avancée : P4 permet en effet de programmer le plan de données de manière flexible et personnalisée. En combinant avec P4 une solution open source telle que Aether évoquée plus haut, il est possible de définir et de modifier dynamiquement la manière dont les paquets de données sont traités dans le réseau, ce qui est crucial pour répondre aux exigences spécifiques des services d'inférence LLM ;
- support des spécifications UPF haute performance : la compatibilité avec P4 permet de tirer pleinement parti des capacités de l'UPF dans Aether, en optimisant le traitement des paquets directement dans le réseau avec possibilité, comme indiqué plus haut, d'implémenter localement des fonctionnalités telles que l'optimisation du cache, le routage des LLM, etc. et autres opérations complexes nécessaires pour les services d'inférence ;
- flexibilité du plan de contrôle et du plan de données : P4 offre une grande flexibilité pour programmer non seulement le plan de données 130, mais aussi pour interagir de manière fine avec le plan de contrôle 140. Cette flexibilité est exploitée dans Aether pour créer des solutions réseau hautement adaptées et optimisées, notamment pour les applications exigeantes telles que celles reposant sur des inférences LLM.

En résumé, le réseau s'adapte en temps réel aux besoins des utilisateurs et optimise les ressources afin d'offrir des services d'inférence LLM avec une latence minimale et une efficacité maximale.

Pour sa part, l'utilisation pour le réseau 5G d'une solution open source telle que Aether procure les avantages suivants :
- possibilité d'exécution sur un environnement Kubernetes, qui simplifie l'intégration d'autres services Kubernetes et facilite l'orchestration et la gestion des ressources réseau en cohérence avec les autres services déployés dans l'infrastructure ;
- support de la spécification UPF haute performance, avec les avantages exposés plus haut, tels que grande programmabilité à la fois des plans de contrôle et de données et gestion efficace du trafic de données permettant de bénéficier de transferts de données à ultra faible latence et à haut débit.

Par ailleurs, le réseau distribué de UPF 130 est un réseau pouvant comprendre des UPF en nombre variable et dynamiquement modulable en fonction des besoins instantanés du réseau et des utilisateurs.

Enfin, il est possible de regrouper et de combiner dans le même plan utilisateur 130 des UPF 131, 132, 133, 134, ... de catégories différentes, par exemple :
- des UPF pouvant supporter des volumes importants de trafic de données, dont la fonction principale sera la commutation/le routage du trafic des données entre les UE et l'Internet public. Cette fonction peut être par exemple modélisée par une machine à états finis dont les paquets de données traversent des blocs de traitement prédéfinis et fixes ;
- des UPF qui opèrent à proximité des UE, dont la chaîne de traitement de paquets de données appliquée par le réseau d'accès radio est modulable et comprend, outre les fonctions de routage/commutation, des fonctions de prétraitement des requêtes vers les applications LLM, ces fonctions faisant partie des services d'inférence LRaaS (routage des LLM) et LCaaS (caches LLM) et étant implémentables à la demande.

## Revendications

1. Une architecture de traitement intégré d'un pipeline de services d'inférence basés sur des Grands modèles de langage, LLM, avec un réseau 5G (100), comprenant :
- un réseau d'accès radio (120), pour la communication radiofréquence avec des équipements utilisateurs, UE (110) ;
- un réseau distribué (130) de Fonctions de plan utilisateur, UPF (131 ... 134), faisant également fonction de plan de transport de données pour l'acheminement de paquets de données de/vers les UE (110) ; et
- un plan de contrôle de réseau cœur (140) comprenant des fonctions 5G selon 3GPP (141 ... 145) ; et
- un métacontrôleur (200) comprenant :
- un registre de services à la demande (210), comportant au moins un service d'inférence LLM (211-215) apte à être déployé à la demande ou de façon automatisée ;
- un orchestrateur centralisé (220), apte à coopérer d'une part avec le plan de contrôle de réseau cœur (140) et d'autre part avec le registre de services à la demande (210) ;
- un gestionnaire de cycle de vie (240), pour l'instanciation, la surveillance, la mise à jour, le redimensionnement et/ou la terminaison des services d'inférence ; et
- un opérateur de requêtes (230), apte à délivrer, à l'au moins un service d'inférence LLM (211215) du registre de services à la demande (210), des requêtes de service générées par l'orchestrateur centralisé (220),
dans laquelle le réseau distribué (130) de UPF (131 ... 134) est un réseau programmable dynamiquement par l'orchestrateur centralisé (220), à la demande du gestionnaire de cycle de vie (240), via le plan de contrôle de réseau cœur (140),
et dans laquelle l'orchestrateur centralisé (220) comprend :
• des moyens (221) pour surveiller en continu le réseau 5G (100), aptes à analyser des requêtes utilisateur produites par les UE (110), pour en dériver des profils utilisateur et des modèles d'utilisation des services d'inférence LLM ;
• des moyens (222-224) pour, en fonction des profils utilisateur et des modèles d'utilisation des services d'inférence LLM obtenus :
. sélectionner dynamiquement des ressources en fonction des profils utilisateur et des modèles d'utilisation des services d'inférence LLM,
. modifier dynamiquement la configuration du réseau 5G (100) par interaction avec les UPF (131 ... 134), et/ou
. programmer les UPF (131 ... 134) pour l'exécution locale de tâches spécifiques liées à l'inférence LLM par modification des paquets en provenance et/ou à destination des UE (110) ; et
• des moyens (225) pour générer les requêtes de service à destination de l'opérateur de requêtes (230).

2. L'architecture de traitement de la revendication 1, dans laquelle, pour dériver automatiquement les profils utilisateur et les modèles d'utilisation des services d'inférence LLM, les moyens (221) de surveillance en continu du réseau 5G (100) de l'orchestrateur centralisé (220) comprennent des moyens processeurs coopérant avec une base de données mise en œuvre avec des algorithmes d'apprentissage machine.

3. L'architecture de traitement de la revendication 1, dans laquelle l'au moins un service d'inférence LLM comprend au moins l'un d'entre :
- un service LCaaS (211) de caches LLM par modèle de langage, pour une orchestration dynamique et optimale des caches des applications LLM à travers le réseau edge afin de réduire la latence des requêtes ;
- un service eCaaS (212) d'allocation dynamique de bande passante des ressources radio 5G, pour adaptation de la bande passante au régime d'utilisation des LLM et des classes de trafic prédéfinies downlink/uplink/downlink&uplink en fonction des besoins spécifiques des UE (110) ;
- un service INFaaS (213) d'inférence LLM personnalisée pour les UE (110) ;
- un service GRaaS (214) de gestion de garde-fous LLM pour renforcement de la confidentialité des requêtes utilisateur ; et/ou
- un service LRaaS (215) de routage des requêtes utilisateur produites par les UE (110) vers le modèle de langage le plus approprié pour réduction de la latence et/ou amélioration de la Qualité de service, QoS, et/ou de la pertinence des réponses aux requêtes utilisateur ;
- et toute combinaison des précédents.

4. L'architecture de traitement de la revendication 1, dans laquelle les services d'inférence LLM (211-215) sont des fichiers descriptifs de type Infrastructure as Code, laC.

5. L'architecture de traitement de la revendication 1, dans laquelle les requêtes de service générées par l'orchestrateur centralisé (220) et l'opérateur de requêtes (230) mettent en œuvre des Fonctions réseau containérisées, CNF, correspondant aux services d'inférence LLM inclus dans le registre de services à la demande (210).

6. L'architecture de traitement de la revendication 5, dans laquelle les CNF correspondant aux services d'inférence LLM sont opérées dans une architecture de Virtualisation des fonctions réseau, NFV, selon les spécifications ETSI.

7. L'architecture de traitement de la revendication 1, dans laquelle le réseau distribué (130) de UPF (131 ... 134) est un réseau hétérogène comprenant :
- des UPF de fonction principale de commutation/routage, et/ou
- des UPF comprenant, en plus des fonctions de commutation/routage, des fonctions modulables de prétraitement des requêtes utilisateur spécifiques aux applications des LLM.

8. L'architecture de traitement de la revendication 1, dans laquelle le réseau distribué (130) de UPF (131 ... 134) est un réseau comprenant un nombre dynamiquement modulable de UPF.

9. L'architecture de traitement de la revendication 1, dans laquelle les UPF (131 ... 134) sont développées sous forme de microservices déployés dans des infrastructures cloud dans des conteneurs orchestrés par un orchestrateur de conteneurs.

10. L'architecture de traitement de la revendication 1, dans laquelle les UPF (131 ... 134) sont programmées en langage P4.

11. L'architecture de traitement de la revendication 1, dans laquelle le réseau 5G (100), l'orchestrateur centralisé (220) et le registre de services à la demande (210) sont implémentés en tant que fonctions containérisées, dont l'instanciation et la gestion de cycle de vie sur l'infrastructure matérielle des centres de données (300) sont gérées par un orchestrateur de conteneurs.

12. L'architecture de traitement de l'une des revendications 9 ou 11, dans laquelle l'orchestrateur de conteneurs est une solution Kubernetes, et le réseau 5G est une solution open source de type Free5gc ou sd-core.

13. L'architecture de traitement de la revendication 1, dans laquelle les profils utilisateur et les modèles d'utilisation des services d'inférence LLM comprennent au moins l'un d'entre :
- fréquence d'utilisation ;
- popularité de contenu ;
- localisation et/ou mobilité géographique des UE ;
- contrainte de Qualité de service, QoS ;
- contrainte de latence ; et/ou
- interactions avec d'autres UE (110) ;
- et toute combinaison des précédents.

14. L'architecture de traitement de la revendication 1, dans laquelle lesdites tâches spécifiques liées à l'inférence LLM exécutées localement par les UPF (131 ... 134) comprennent au moins l'une d'entre :
- génération augmentée par récupération, RAG ;
- optimisation dynamique de caches utilisateur ;
- routage spécifique des requêtes utilisateur ;
- calcul de métrique de similarité d'utilisations entre UE (110);
- clustering de données UE similaires en entrée et/ou en sortie ; et/ou
- opération d'inférence LLM ;
- et toute combinaison des précédents.

15. L'architecture de traitement de la revendication 1, dans laquelle les UE (110) sont des équipements du groupe comprenant des smartphones, des robots autonomes, et/ou des caméras de surveillance vidéo, comprenant un circuit permettant la connexion au réseau 5G (100) et dont le profil est déjà renseigné dans une base d'utilisateurs du réseau cœur (140).

## Patentansprüche

1. Eine integrierte Verarbeitungsarchitektur einer Pipeline für Inferenzdienste, die auf großen Sprachmodellen (LLM) basieren, mit einem 5G-Netzwerk (100), umfassend:
- ein Funkzugangsnetz (120) für die Hochfrequenz-Kommunikation mit Benutzerausrüstungen (UE) (110);
- ein verteiltes Netzwerk (130) von programmierbaren Benutzerebene-Funktionen (UPF) (131 ... 134), das auch als Datentransportebene für die Weiterleitung von Datenpaketen von/zu den UE (110) dient; und
- eine Kernnetzwerk-Steuerungsebene (140), die die 5G-Funktionen gemäß 3GPP (141 ... 145) umfasst; und
**dadurch gekennzeichnet, dass** sie einen Meta-Controller (200) umfasst, der Folgendes umfasst:
- ein Abrufdienstverzeichnis (210), das mindestens einen LLM-Inferenzdienst (211-215) enthält, der auf Abruf oder automatisiert genutzt werden kann;
- einen zentralisierten Orchestrator (220), der imstande ist, einerseits mit der Kernnetzwerk-Steuerungsebene (140) und andererseits mit dem Abrufdienstverzeichnis (210) zusammenzuwirken;
- einen Lebenszyklus-Manager (240) für die Instanziierung, Überwachung, Aktualisierung, Redimensionierung und/oder Beendigung der Inferenzdienste; und
- einen Abfrage-Operator (230), der imstande ist, dem mindestens einen LLM-Inferenzdienst (211-215) des Abrufdienstverzeichnisses (210) Dienstabfragen bereitzustellen, die durch den zentralisierten Orchestrator (220) generiert werden,
wobei das verteilte Netzwerk (130) von UPF (131 ... 134) ein Netzwerk ist, das, auf Abruf des Lebenszyklus-Managers (240), über die Kernnetzwerk-Steuerungsebene (140), durch den zentralisierten Orchestrator (220) dynamisch programmierbar ist,
und wobei der zentralisierte Orchestrator (220) Folgendes umfasst:
• ein Mittel (221) zum kontinuierlichen Überwachen des 5G-Netzwerks (100), das imstande ist, durch die UE (110) erzeugte Benutzerabfragen zu analysieren, um daraus Benutzerprofile und LLM-Inferenzdienste-Nutzungsmodelle herzuleiten;
• Mittel (222-224), um, gemäß den erhaltenen Benutzerprofilen und LLM-Inferenzdienste-Nutzungsmodellen:
. dynamisch Ressourcen gemäß den Benutzerprofilen und LLM-Inferenzdienste-Nutzungsmodellen auszuwählen,
. dynamisch die Konfiguration des 5G-Netzwerks (100) durch Interaktion mit den UPF (131 ... 134) zu verändern und/oder
. die UPF (131 ... 134) für die lokale Ausführung von spezifischen Aufgaben, die mit der LLM-Inferenz verknüpft sind, durch Veränderung der Pakete von/zu den UE (110) zu programmieren; und
• ein Mittel (225), um die Dienstabfragen an den Abfrage-Operator (230) zu generieren.

2. Die Verarbeitungsarchitektur nach Anspruch 1, wobei, um die Benutzerprofile und die LLM-Inferenzdienste-Nutzungsmodelle automatisch herzuleiten, das Mittel (221) zum kontinuierlichen Überwachen des 5G-Netzwerks (100) des zentralisierten Orchestrators (220) ein Prozessormittel umfasst, das mit einer Datenbank zusammenwirkt, die mit Algorithmen für maschinelles Lernen implementiert ist.

3. Die Verarbeitungsarchitektur nach Anspruch 1, wobei der mindestens eine LLM-Inferenzdienst mindestens einen umfasst von:
- einem LCaaS-Dienst (211) für LLM-Caches pro Sprachmodell, für eine dynamische und optimale Orchestrierung der Caches der LLM-Anwendungen durch das Edge-Netzwerk hindurch, um die Latenz der Abfragen zu reduzieren;
- einem eCaaS-Dienst (212) für die dynamische Bandbreitenzuweisung der 5G-Funkressourcen, zur Anpassung der Bandbreite an die Regelung über die Nutzung der LLM und der vordefinierten Downlink/Uplink/Downlink&Uplink-Verkehrsklassen gemäß den spezifischen Bedürfnissen der UE (110);
- einem INFaaS-Dienst (213) für auf die UE (110) zugeschnittene LLM-Inferenzdienste;
- einem GRaaS-Dienst (214) zur Verwaltung von LLM-Schutzmaßnahmen zur Erhöhung der Vertraulichkeit der Benutzerabfragen; und/oder
- einem LRaaS-Dienst (215) für das Routing der durch die UE (110) erzeugten Benutzerabfragen an das Sprachmodell, das zur Reduzierung der Latenz und/oder Verbesserung der Dienstgüte (QoS) und/oder der Relevanz der Antworten auf die Benutzerabfragen am meisten geeignet ist;
- und jede beliebige Kombination der oben genannten Parameter.

4. Die Verarbeitungsarchitektur nach Anspruch 1, wobei die LLM-Inferenzdienste (211-215) Definitionsdateien vom Typ Infrastructure as Code (IaC) sind.

5. Die Verarbeitungsarchitektur nach Anspruch 1, wobei die durch den zentralisierten Orchestrator (220) und den Abfrage-Operator (230) erzeugten Dienstabfragen cloudnative Netzwerk-Funktionen (CNF) einsetzen, die den LLM-Inferenzdiensten entsprechen, die in dem Abrufdienstverzeichnis (210) enthalten sind.

6. Die Verarbeitungsarchitektur nach Anspruch 5, wobei die den LLM-Inferenzdiensten entsprechenden CNF in einer Network Functions Virtualization (NFV)-Architektur gemäß den ETSI-Spezifikationen ausgeführt sind.

7. Die Verarbeitungsarchitektur nach Anspruch 1, wobei das verteilte Netzwerk (130) von UPF (131 ... 134) ein heterogenes Netzwerk ist, das Folgendes umfasst:
- UPF mit der Grundfunktion des Switching/Routing und/oder
- UPF, die, zusätzlich zu den Switching/Routing-Funktionen, modulierbare Funktionen zur Vorverarbeitung der spezifischen Benutzerabfragen für die LLM-Anwendungen umfassen.

8. Die Verarbeitungsarchitektur nach Anspruch 1, wobei das verteilte Netzwerk (130) von UPF (131 ... 134) ein Netzwerk ist, das eine dynamisch modulierbare Anzahl von UPF umfasst.

9. Die Verarbeitungsarchitektur nach Anspruch 1, wobei die UPF (131 ... 134) in Form von Mikrodiensten entwickelt sind, die in Cloud-Infrastrukturen in durch einen Containerorchestrator orchestrierten Containern genutzt werden.

10. Die Verarbeitungsarchitektur nach Anspruch 1, wobei die UPF (131 ... 134) in der Sprache P4 programmiert sind.

11. Die Verarbeitungsarchitektur nach Anspruch 1, wobei das 5G-Netzwerk (100), der zentralisierte Orchestrator (220) und das Abrufdienstverzeichnis (210) als containerisierte Funktionen implementiert sind, bei denen die Instanziierung und das Lebenszyklus-Management in der hardwareseitigen Infrastruktur der Datenzentren (300) durch einen Containerorchestrator verwaltet sind.

12. Die Verarbeitungsarchitektur nach einem der Ansprüche 9 oder 11, wobei der Containerorchestrator eine Kubernetes-Lösung ist und das 5G-Netzwerk eine Open Source-Lösung vom Typ Free5gc oder sd-core ist.

13. Die Verarbeitungsarchitektur nach Anspruch 1, wobei die Nutzerprofile und die Nutzermodelle der LLM-Inferenzdienste mindestens eines umfassen von:
- Nutzungshäufigkeit;
- Inhaltsbeliebtheit;
- Lokalisierung und/oder geographische Mobilität der UE;
- Dienstgüte(QoS)-Einschränkung;
- Latenzeinschränkung;
- Interaktionen mit anderen UE (110);
- und jede beliebige Kombination der oben genannten Parameter.

14. Die Verarbeitungsarchitektur nach Anspruch 1, wobei die spezifischen Aufgaben, die mit der LLM-Inferenz verknüpft sind und durch die UPF (131 ... 134) lokal ausgeführt werden, mindestens eines umfassen von:
- Retrieval-Augmented Generation (RAG);
- dynamische Optimierung von Benutzer-Caches;
- spezifisches Routing der Benutzerabfragen;
- Berechnung des Ähnlichkeitsmaßes von Nutzungen zwischen UE (100);
- Clustering von ähnlichen UE-Daten am Eingang und/oder am Ausgang; und/oder
- LLM-Inferenz-Betrieb;
- und jede beliebige Kombination der oben genannten Parameter.

15. Die Verarbeitungsarchitektur nach Anspruch 1, wobei die UE (110) Ausrüstungen der Gruppe sind, die Smartphones, autonome Roboter und/oder Videoüberwachungskameras umfasst, die eine Schaltung umfassen, die die Verbindung mit dem 5G-Netzwerk (100) ermöglicht und deren Profil bereits in einer Benutzerdatenbank des Kernnetzwerks (140) erfasst ist.

## Claims

1. An integrated processing architecture for a pipeline of inference services based on Large Language Models, LLMs, with a 5G network (100), comprising:
- a radio access network (120), for radiofrequency communication with user equipments, UEs (110);
- a distributed network (130) of User Plane Functions, UPFs (131 ... 134), also acting as a data transport plane for routing data packets to/from the UEs (110);
- a core network control plane (140) comprising 5G functions according to 3GPP (141 ... 145); and
- a metacontroller (200) comprising:
- an on-demand service register (210), including at least an LLM inference service (211-215) adapted to be deployed on demand or on an automated basis;
- a centralized orchestrator (220), adapted to cooperate, on the one hand, with the core network control plane (140) and, on the other hand, with the on-demand service register (210);
- a life-cycle manager (240), for instantiating, monitoring, updating, scaling and/or terminating the inference services; and
- a request operator (230), adapted for providing, to the at least one LLM inference service (211-215) of the on-demand service register (210), service requests generated by the centralized orchestrator (220),
wherein the distributed network (130) of UPFs (131 ... 134) is a network that can be dynamically programmed by the centralized orchestrator (220), on demand from the life-cycle manager (240), via the core network control plane (140),
and wherein the centralized orchestrator (220) comprises:
• means (221) for continuously monitoring the 5G network (100), adapted to analyse user requests issued by the UEs (110), to derive therefrom user profiles and LLM inference service usage models;
• means (222-224) for, based on the obtained user profiles and LLM inference service usage models:
. dynamically selecting resources based on the user profiles and LLM inference service usage models,
. dynamically modifying the configuration of the 5G network (100) by interacting with the UPFs (131 ... 134), and/or
programming the UPFs (131 ... 134) for local execution of specific tasks related to the LLM inference by modifying packets from and/or to the UEs (110); and
• means (225) for generating the service requests to the request operator (230).

2. The processing architecture of claim 1, wherein, for automatically deriving the user profiles and the LLM inference service usage models, the means (221) of the centralized orchestrator (220) for continuously monitoring the 5G network (100) comprise processor means co-operating with a database implemented with machine learning algorithms.

3. The processing architecture of claim 1, wherein the at least one LLM inference service comprises at least one service among:
- a LCaaS service (211) of LLM caches per language model, for a dynamic and optimum orchestration of the caches of the LLM applications through the edge network in order to reduce the latency of the requests;
- an eCaaS service (212) for a dynamic bandwidth allocation of the 5G radio resources, for adapting the bandwidth to the usage regime of the LLMs and of the predefined downlink/uplink/downlink&uplink traffic classes based on the specific needs of the UEs (110);
- an INFaaS service (213) of customized LLM inference for the UEs (110);
- a GRaaS service (214) of management of LLM guardrails, to reinforce confidentiality of the user requests; and/or
- a LRaaS service (215) of routing of the user requests issued by the UEs (110) to the most suitable language model for reducing the latency and/or improving the quality of service, QoS, and/or the relevance of answers to the requests of the user;
- and any combination of the above.

4. The processing architecture of claim 1, wherein the LLM inference services (211-215) are descriptive files of an Infrastructure as Code, IaC, type.

5. The processing architecture of claim 1, wherein the service requests generated by the centralized orchestrator (220) and the request operator (230) implement Containerized Network Functions, CNFs, corresponding to the LLM inference services included in the on-demand service register (210).

6. The processing architecture of claim 5, wherein the CNFs corresponding to the LLM inference services are operated in a Network Functions Virtualisation, NFV, architecture according to ETSI specifications.

7. The processing architecture of claim 1, wherein the distributed network (130) of UPFs (131 ... 134) is an heterogeneous network comprising:
- UPFs (131 ... 134) which main function is switching/routing, and/or
- UPFs (131 ... 134) comprising, in addition to switching/routing functions, adjustable functions for pre-processing user requests specific to the LLM applications.

8. The processing architecture of claim 1, wherein the distributed network (130) of UPFs (131 ... 134) is a network comprising a dynamically adjustable number of UPFs.

9. The processing architecture of claim 1, wherein the UPFs (131 ... 134) are developed as micro-services deployed in cloud infrastructures in containers orchestrated by a container orchestrator.

10. The processing architecture of claim 1, wherein the UPFs (131 ... 134) are programmed in P4 language.

11. The processing architecture of claim 1, wherein the 5G network (100), the centralized orchestrator (220), and the on-demand service register (210) are implemented as containerized functions, which instantiation and life-cycle management on the hardware infrastructure of data centers (300) are managed by an container orchestrator.

12. The processing architecture of claims 9 or 11, wherein the container orchestrator is a Kubernetes solution, and the 5G network is an open source solution of a Free5gc or sd-core type.

13. The processing architecture of claim 1, wherein the user profiles and the LLM inference service usage models comprise at least one among:
- frequency of use;
- content popularity;
- location and/or geographic mobility of the UEs;
- quality of service, QoS, constraint;
- latency constraint; and/or
- interactions with other UEs (110);
- and any combination of the above.

14. The processing architecture of claim 1, wherein said specific tasks related to the LLM inference executed locally by the UPFs (131 ... 134) comprise at least one among:
- Recovery-Augmented Generation, RAG;
- dynamic optimisation of user caches;
- specific routing of the user requests;
- calculation of similarity usage metrics between UEs (110);
- clustering of input and/or output similar UE data; and/or
- LLM inference operation;
- and any combination of the above.

15. The processing architecture of claim 1, wherein the UEs (110) are equipments of the group comprising smartphones, autonomous robots and/or video surveillance cameras, comprising a circuit for connection to the 5G network (100) and which profile has already been entered into a users database (140) of the core network.
